Europäisches Patentamt

European Patent Office

Office européen des brevets

(19)

(11) Veröffentlichungsnummer: **0 006 422**
**B1**

(12) **EUROPÄISCHE PATENTSCHRIFT**

(45) Veröffentlichungstag der Patentschrift: **19.05.82**

(51) Int. Cl.³: **F 16 L 59/08, B 32 B 15/08**

(21) Anmeldenummer: **79100971.5**

(22) Anmeldetag: **30.03.79**

(54) **Verfahren zum Umhüllen gerader Rohrstücke mit Zuschnitten aus Folienlaminat.**

(30) Priorität: **07.04.78 DE 2815049**

(43) Veröffentlichungstag der Anmeldung:
**09.01.80 Patentblatt 80/1**

(45) Bekanntmachung des Hinweises auf die Patenterteilung:
**19.05.82 Patentblatt 82/20**

(84) Benannte Vertragsstaaten:
**BE CH DE FR GB LU NL SE**

(56) Entgegenhaltungen:
**DE - A - 1 425 481**
**DE - A - 1 525 695**
**DE - A - 1 924 744**
**DE - A - 1 944 662**
**US - A - 3 556 887**

(73) Patentinhaber: **HOECHST AKTIENGESELLSCHAFT**
**Postfach 80 03 20**
**D-6230 Frankfurt/Main 80 (DE)**

(72) Erfinder: **Zerfass, Karl Christian**
**Buschungstrasse 52**
**D-6200 Wiesbaden (DE)**
Erfinder: **Urban, Martin**
**Pappelweg 7**
**D-6200 Wiesbaden (DE)**

Courier Press, Leamington Spa, England.

## Verfahren zum Umhüllen gerader Rohrstücke mit Zuschnitten aus Folienlaminat

Die Erfindung betrifft ein Verfahren zum Umhüllen gerader, bevorzugt isolierter Rohrstücke unter Einsatz rechteckiger Zuschnitte aus formrückstelltendenzfreiem, zweilagigem Folienlaminat, das aus einer ersten Folie aus Aluminium und einer zweiten Folie aus thermoplastischem Kunststoff aufgebaut ist.

In der DE—A 19 44 662 ist ein Folienlaminat mit bleibender Rolltendenz beschrieben, das aus einer Lage aus Aluminium und einer Lage aus thermoplastischem Kunststoff besteht; ein rechteckiger Zuschnitt des Folienlaminats wird zur Herstellung einer hohlzylinderförmigen Hülle um das gerade Rohrstück verwendet. Der nach der bakannten Lehre eingesetzte Folienlaminatzuschnitt ist infolge der ihm innewohnenden bleibenden längsaxialen Rolltendenz bestrebt, seine ursprüngliche, gekrümmte Form beizubehalten. Der bekannte Folienlaminatzuschnitt ist nicht formrückstelltendenzfrei.

Bei der Verwendung des bekannten Folienzuschnitts zum Umhüllen gerader Rohrstücke ist seine bleibende Rolltendenz deshalb von Nachteil, weil es für einen einzelnen Arbeiter schwierig ist, ohne besondere Hilfsmaßnahmen aus dem Folienzuschnitt eine Hülle um ein gerades Rohrstück zu bilden. Die bekannten Folienzuschnitte sind auch insofern nicht variabel einsetzbar, da nur diejenige Lage des Zuschnitts, welche seine konvex gekrümmte Außenseite bildet, die Außenseite der Hülle bilden kann, die das Rohrstück umgibt.

Infolge der Rolltendenz des Zuschnittes sind aus diesem auch nur solche hohlzylindrischen Hüllen um das gerade Rohrstück bildbar, bei denen die Längen der hohlzylinderförmigen Hüllen der Breite der Zuschnitte entsprechen, aus denen diese bestehen.

In dem US—A 3,556,887 ist ein Folienlaminat beschrieben, das aus einer Schicht aus Aluminium und einer Schicht aus Polyethylen, Polypropylen oder Polyvinylchlorid besteht. Dieses Folienlaminat wird zur Verwendung auf dem Verpackungssektor vorgeschlagen.

Diese Druckschrift enthält keinen Hinweis, die Folie bei einem Verfahren zur Herstellung hohlzylindrischer Mäntel aus Folie um gerade Rohrstücke einzusetzen.

Der Erfindung liegt die Aufgabe zugrunde, ein Verfahren zur Herstellung hohlzylindrischer Hüllen aus Kunststoffolie vorzuschlagen, bei dem zur Bildung der Hülle ein variabel einsetzbarer Folienlaminatzuschnitt verwendet wird, der formrückstelltendenzfrei ist.

Die der Erfindung zugrundeliegende Aufgabe wird gelöst durch das in Anspruch 1 angegebene Verfahren.

Vorteilhafte Ausführungsformen des Verfahrens sind in den auf Anspruch 1 rückbezogenen Unteransprüchen konkretisiert.

Der zur Verfahrensdurchführung eingesetzte rechteckige Folienlaminatzuschnitt besteht aus einer Lage aus Aluminiumfolie und einer mit dieser fest verbundenen Lage aus thermoplastischer Kunststoffolie. Geeignete thermoplastische Kunststoffolien sind dabei solche, die aus Polyvinylchlorid, Polyethylen oder Polypropylen bestehen.

Unter Polyethylenfolien soll definitionsgemäß eine solche verstanden werden, deren Steifigkeit der Steifigkeit einer gleichdicken Folie aus Hart-PVC entspricht. Repräsentativ für derartige Polyethylenfolien sind solche aus Polyethylen hoher Dichte (0,940 bis 0,966) bzw. hoher Kristallinität (75 bis 95 %).

Der Verbund der beiden, das Laminat bildenden Folien wird beispielsweise durch Verklebung derselben bewirkt, wobei der Kleber beispielsweise ein solcher auf Polyurethanbasis, vorteilhaft ein Polyurethan-Zweikomponentenkleber ist. Die Dicke der Klebeschicht zwischen beiden genannten Folien des Laminats ist vernachlässigbar gering und trägt zur Steifigkeit des Laminats nicht bei.

Die laminatlage aus Aluminiumfolie hat eine Dicke im Bereich von 25 bis 100 $\mu$m, bevorzugt im Bereich von 30 bis 50 $\mu$m, die Laminatlage aus thermoplastischer Kunststoffolie hat eine Dicke im Bereich von 200 bis 750 $\mu$m, vorteilhaft im Bereich von 300 bis 400 $\mu$m.

Die angegebenen unteren bzw. oberen Grenzwerte der Dicken der bezeichneten Folien sind einander jeweils zugeordnet.

Das Folienlaminat ist bei Raumtemperatur formrückstelltendenzfrei, d.h. es behält die ihm durch Biegen bei Raumtemperatur verliehene Form von selbst bei und ist nicht bestrebt, von selbst seine vorherige Form wieder anzunehmen.

Unter einem rechteckigen Folienlaminatzuschnitt ist ein solcher zu verstehen, der entsteht, wenn man von einer Folienlaminatbahn ein Stück derart abschneidet, daß die Schnittlinie einen rechten Winkel mit der Folienbahnlängsachse bildet und seine Länge wenigstens dem Umfang des Rohrstücks entspricht, das mit ihm umhüllt werden soll.

Der Laminatzuschnitt hat demnach zwei parallele Schnittränder, deren Abstand voneinander die Länge des Zuschnitts bestimmt, sowie zwei parallele Seitenränder, die den Seitenränderen der Folienbahn entsprechen, von der der Zuschnitt abgeschnitten wurde.

Die Herstellung zweilagiger Folienlaminate ist bekannt und nicht Gegenstand vorliegender Erfindung.

Die Durchführung des erfindungsgemäßen Verfahrens wird nachfolgend beispielhaft beschrieben.

Man geht von einem rechteckigen Folienlaminatzuschnitt aus, beispielsweise einem solchen, der aus einer 350 $\mu$m dicken Folie aus Hart-PVC und einer 50 $\mu$m dicken

Folie aus Aluminium besteht. Zu diesem Zuschnitt gelangt man beispielsweise dadurch, daß man von einer Bahn aus bezeichnetem Folienlaminat ein Stück derart abschneidet, daß die gerade Schnittlinie einen rechten Winkel mit der Bahnlängsachse bildet.

Die Länge des Zuschnitts wird derart bemessen, daß sie wenigstens dem Umfang des mit dem Zuschnitt zu ummantelnden Rohres entspricht.

Der Zuschnitt wird dann bei Raumtemperatur von Hand derart an das mit diesem zu umhüllenden Rohr angelegt und um dieses zu einer hohlzylinderförmigen Hülle gebogen, daß dabei die parallel zu den Zuschnittsseitenrändern verlaufende Zuschnittachse einen rechten Winkel mit der Rohrlängsachse bildet.

Bei der genannten Biegeoperation bewegen sich die Schnittränder des Zuschnitts aufeinander zu und verlaufen nach erfolgter Bildung der hohlzylinderförmigen Folienhülle parallel zueinander und parallel zur Hüllenachse.

Wenn man von einem Zuschnitt ausgeht, dessen Länge größer ist als der Rohrumfang, ergibt sich bei der angegebenen Biegeoperation eine hohlzylinderförmige Hülle um das Rohr, bei der die schnittrandnahen Bereiche des diese bildenden Zuschnitts überlappend verlaufen. Diese Ausbildung der hohlzylinderförmigen Hülle ist bevorzugt.

Das Verfahren ist in der Weise abwandelbar, daß entweder die eine oder die andere Außenseite des Zuschnitts die Außenseite des aus diesem gebildeten, das Rohr umgebenden hohlzylinderförmige Hülle bildet.

Sofern die Außenseite der das Rohr umgebenden Hülle durch die Aluminiumfolie des Folienlaminats, wobei diese vorzugsweise eine Lackierung besitzt, gebildet wird, ist die Hülle insbesondere resistent gegen Licht- und Wettereinwirkung. Derart ummantelte Rohre sind insbesondere als Freileitungen geeignet.

Die Aluminiumfolie der Hülle trägt zusätzlich zur Schwerentflammbarkeit derselben bei und vermindert im Brandfall die Rauchentwicklung.

Sofern der rechteckige Zuschnitt derart bemessen ist, daß seine Breite wenigstens dem Rohrumfang entspricht oder daß er breiter als dieser ist, kann man hohlzylinderförmige Hüllen um das Rohr bilden, deren Länge der Länge des Zuschnitts entspricht.

Dabei wird ein entsprechend lang bemessener Zuschnitt derart an das Rohr angelegt und um dieses bei Raumtemperatur gebogen, daß die Längsachse des Zuschnitts parallel zur Längsachse des Rohres verläuft. Man biegt dann den Zuschnitt derart um das Rohr, daß die Zuschnittsseitenränder sich aufeinander zu bewegen und soweit, daß eine hohlzylindrische Hülle um das Rohr entsteht, bei der die Seitenränder des die Hülle bildenden Zuschnitts parallel zueinander und parallel zur Hüllenachse verlaufen; bei entsprechender Bemessung der Breite des Zuschnitts überlappen die seitenrandnahen Bereiche des Zuschnitts. Diese Verfahrensvariante ermöglicht die Herstellung ummantelter Rohrstücke, bei denen die sie umgebenden hohlzylinderförmigen Hüllen umfänglich unterbrechungsfrei sind.

Die nach den angegebenen Verfahrensvarianten herstellbaren hohlzylinderförmigen Hüllen um das Rohr sind jeweils selbständig formstabil, d.h. nicht bestrebt, ihre Gestalt von selbst zu verändern.

Durch leichtes Anpressen der Hüllen an das Rohr können diese zum engen Anliegen an dieses gebracht werden.

Die Schlitzzone zylinderförmiger Hüllen bzw. ihre Überlappungszone können bei Bedarf jeweils über die gesamte Länge mit einem Klebeband überklebt werden, das hinreichend breit und ausreichend lang ist.

Wegen der Einfachheit des erfindungsgemäßen Verfahrens kann dieses ohne Schwierigkeiten von einer einzigen ungeübten Arbeitskraft durchgeführt werden.

**Patentansprüche**

1. Verfahren zur Ummantelung gerader Rohrstücke mit einer Hülle aus Folienlaminat, das aus einer Lage aus Aluminium und einer Lage aus thermoplastischem Kunststoff besteht, bei dem man aus einem rechteckigen Folienlaminatzuschnitt eine das Rohr umgebende hohlzylinderförmige Hülle bildet, dadurch gekennzeichnet, daß man zur Bildung der Hülle einen aus einer Aluminiumfolie und einer Folie aus Polyethylen, Polypropylen oder Polyvinylchlorid bestehenden formrückstelltendenzfreien Laminatzuschnitt einsetzt, und ihn bei Raumtemperatur zu einem Hohlzylinder um das Rohr biegt, bei dem die Schnittränder bzw. die Seitenränder des den Hohlzylinder bildenden Zuschnitts jeweils parallel zueinander und parallel Hüllenachse verlaufen.

2. Verfahren nach Anspruch 1, dadurch gekennzeichnet, daß die Aluminiumfolie des Laminatzuschnitts eine Dicke im Bereich von 25 bis 100 $\mu$m und die Kunststoffolie desselben eine Dicke im Bereich von 200 bis 750 $\mu$m besitzt.

3. Verfahren nach Anspruch 1 und 2, dadurch gekennzeichnet, daß die Aluminiumfolie des Laminatzuschnitts eine Dicke im Bereich von 30 bis 50 $\mu$m und die Kunststoffolie desselben eine Dicke im Bereich von 300 bis 400 $\mu$m besitzt.

4. Verfahren nach Anspruch 1 bis 3, dadurch gekennzeichnet, daß die hohlzylinderförmige Hülle, die das Rohr umgibt, derart ausgebildet ist, daß die Schnittränder des diese bildenden Zuschnitts parallel zueinander und parallel zur Hüllenachse verlaufen.

5. Verfahren nach Anspruch 1 bis 4, dadurch gekennzeichnet, daß die hohlzylinderförmige Hülle, die das Rohr umgibt, derart ausgebildet ist, daß die Schnittränder des diese bildenden Zuschnitts parallel zueinander und parallel zur Hüllenachse verlaufen und die schnittrandnahen Bereiche desselben sich in überlappender Anordung zueinander befinden.

6. Verfahren nach Anspruch 1 bis 3, dadurch gekennzeichnet, daß man die hohlzylinderförmige Hülle, die das Rohr umgibt, derart formt, daß die Seitenränder des diese bildenden Zuschnitts parallel zueinander und parallel zur Rohrlängsachse verlaufen.

7. Verfahren nach Anspruch 1 bis 3 und 6, dadurch gekennzeichnet, daß man die hohlzylinderförmige Hülle, die das Rohr umgibt, derart formt, daß die Seitenränder des sie bildenden Zuschnitts parallel zueinander und parallel zur Hüllenachse verlaufen und die seitenrandnahen Bereiche des Zuschnitts sich in überlappender Anordnung zueinander befinden.

## Claims

1. A process for jacketing straight lengths of pipe with a shell of a laminated foil comprising an aluminium layer and a layer of a thermoplastic material, by forming a hollow cylindrical shell which surrounds the pipe from a rectangular piece of the laminated foil, characterised in that a cut piece of laminate which is free from elastic memory and comprises an aluminium foil and a polyethylene, polypropylene or polyvinyl chloride film is used to form the shell and is bent around the pipe into the shape of a hollow cylinder, in which the cut edges or lateral edges, respectively, of the piece of laminate constituting the hollow cylinder are parallel to each other and parallel to the axis of the shell.

2. A process as claimed in claim 1, in which the aluminium foil of the cut piece of laminate has a thickness in the range from 25 to 100 $\mu$m and the plastic film of the laminate has a thickness in the range from 200 to 750 $\mu$m.

3. A process as claimed in claims 1 and 2, in which the aluminium foil of the cut piece of laminate has a thickness in the range from 30 to 50 $\mu$m and the plastic film of the laminate has a thickness in the range from 300 to 400 $\mu$m.

4. A process as claimed in any of claims 1 to 3, in which the hollow cylindrical shell which surrounds the pipe is formed in such a manner that the cut edges of the piece of laminate constituting the shell are parallel to each other and parallel to the axis of the shell.

5. A process as claimed in any of claims 1 to 4, in which the hollow cylindrical shell which surrounds the pipe is formed in such a manner that the cut edges of the piece of laminate constituting the shell are parallel to each other and parallel to the axis of the shell and the areas adjacent to the cut edges of the piece of laminate are arranged to overlap.

6. A process as claimed in any of claims 1 to 3, in which the hollow cylindrical shell which surrounds the pipe is formed in such a manner that the lateral edges of the piece of laminate constituting the shell are parallel to each other and parallel to the longitudinal axis of the pipe.

7. A process as claimed in any of claims 1 to 3 and 6, in which the hollow cylindrical shell which surrounds the pipe is formed in such a manner that the lateral edges of the piece of laminate constituting the shell are parallel to each other and parallel to the axis of the shell and the areas adjacent to the lateral edges of the piece of laminate are arranged to overlap.

## Revendications

1. Procédé pour le revêtement d'éléments tubulaires droits à l'aide d'une enveloppe en feuille stratifiée composée d'une couche d'aluminium et d'une couche de matière synthétique thermoplastique, qui consiste à réaliser, à partir d'une pièce rectangulaire découpée dans une feuille stratifiée, une enveloppe en forme de cylindre creux enrobant cet élément tubulaire, caractérisé en ce que, pour réaliser l'enveloppe, on utilise une pièce découpée dans une feuille stratifiée, composée d'une couche d'aluminium et d'une couche de polyéthylène, de polypropylène ou de chlorure de polyvinyle ne tendant pas à reprendre sa forme initiale, après quoi on courbe cette pièce découpée autour de l'élément tubulaire pour en faire un cylindre creux dont les bords de coupe, en l'occurence les bords latéraux de cette pièce découpée formant le cylindre creux, sont parallèles entre eux et parallèles à l'axe de l'enveloppe.

2. Procédé selon la revendication 1, caractérisé en ce que l'épaisseur de la couche d'aluminium de la pièce découpée dans la feuille stratifiée se situe entre 25 et 100 $\mu$m, alors que l'épaisseur de la couche en matière plastique de cette même feuille stratifiée se situe dans une plage de 200 à 750 $\mu$m.

3. Procédé selon les revendications 1 et 2, caractérisé en ce que l'épaisseur de la couche d'aluminium de la pièce découpée dans la feuille stratifiée se situe entre 30 et 50 $\mu$m, alors que l'épaisseur de la couche en matière plastique de cette même feuille stratifiée se situe entre 300 et 400 $\mu$m.

4. Procédé selon les revendications 1 à 3, caractérisé en ce que l'enveloppe en forme de cylindre creux qui enrobe l'élément tubulaire est réalisée de manière que les bords de coupe de la pièce découpée constituant cette enveloppe soient parallèles entre eux et parallèles à l'axe de l'enveloppe.

5. Procédé selon les revendications 1 à 4, caractérisé en ce que l'enveloppe en forme de cylindre creux qui enrobe l'élément tubulaire est réalisée de manière que les bords de coupe de la pièce découpée constituant cette enveloppe, soient parallèles entre eux et parallèles à l'axe de l'enveloppe, alors que les zones proches des bords de coupe de cette pièce découpée se recouvrent étroitement.

6. Procédé selon les revendications 1 à 3, caractérisé en ce que l'enveloppe en forme de cylindre creux qui enrobe l'élément tubulaire est réalisée de manière que les bords latéraux de la pièce découpée constituant cette enveloppe soient parallèles entre eux et parallèles à l'axe longitudinal de l'élément tubulaire.

7. Procédé selon les revendications 1 à 3 et 6, caractérisé en ce que l'enveloppe en forme de cylindre creux, qui enrobe l'élément tubulaire, est réalisée de manière que les bords latéraux de la pièce découpée soient parallèles entre eux et parallèles à l'axe de l'enveloppe, alors que les zones proches des bords latéraux de la pièce découpée se recouvrent étroitement.